# EUROPÄISCHE PATENTSCHRIFT

(11) **EP 3 529 320 B1**
(45) Veröffentlichungstag und Bekanntmachung des Hinweises auf die Patenterteilung: **08.12.2021**
(21) Anmeldenummer: 17786917.9
(22) Anmeldetag: 19.10.2017
(51) Int. Cl.: C08L 91/00, C09D 11/08, C08L 93/00, C09D 11/10

(54) **DRUCKFARBE UND DRUCKLACK**
PRINTING INK AND PRINTING VARNISH
ENCRE D'IMPRIMERIE ET VERNIS D'IMPRIMERIE

(30) Priorität: 21.10.2016 DE 102016120102
(43) Veröffentlichungstag der Anmeldung: 28.08.2019
(73) Patentinhaber: PURe ink systems AG, 86150 Augsburg (DE)
(72) Erfinder: EPPLE, Carl, 86150 Augsburg (DE); EISELE-KOHLER, Artur, 86161 Augsburg (DE)
(74) Vertreter: Hoeger, Stellrecht & Partner Patentanwälte mbB
(86) Internationale Anmeldenummer: PCT/EP2017/076714
(87) Internationale Veröffentlichungsnummer: WO 2018/073345

(56) Entgegenhaltungen:
- EP-A1- 0 774 494
- DE-A1- 19 907 582
- US-A1- 2015 101 506

## Beschreibung

Die vorliegende Erfindung betrifft eine Druckfarbe oder einen Drucklack, insbesondere für den Offsetdruck, umfassend ein Bindemittel und optional ein oder mehrere Pigmente.

Die Erfindung betrifft ferner die Verwendung der Druckfarbe oder des Drucklacks in einem Druckverfahren, insbesondere einem Offsetdruckverfahren.

Bei einem Druckverfahren wie dem Offsetdruck, aber auch bei anderen Arten des Flach-, Hoch- und Tiefdrucks, erfolgt nach dem Aufbringen der Druckfarbe oder des Drucklacks auf den Bedruckstoff (Substrat) eine Härtung, d.h. eine Verfestigung des Bindemittels, welches im Fall einer Druckfarbe die als Farbmittel enthaltenen Pigmente an den Bedruckstoff bindet. Ein Drucklack unterscheidet sich von einer Druckfarbe dadurch, dass keine Pigmente enthalten sind, sondern das verfestigte Bindemittel eine transparente Beschichtung auf dem Bedruckstoff bildet (häufig als Schutzschicht für eine vorhergehende Bedruckung). Die nachfolgende Beschreibung bezieht sich, sofern nicht explizit anders angegeben, jeweils gleichermaßen auf Druckfarben und auf Drucklacke, auch wenn der Einfachheit halber häufig nur Druckfarben angesprochen werden.

Die Härtung einer Druckfarbe beruht in der Regel auf verschiedenen physikalischen und chemischen Vorgängen, die je nach Zusammensetzung der Druckfarbe und Art des Druckverfahrens in unterschiedlichen Anteilen zur Härtung beitragen. Häufig resultiert die Härtung zumindest teilweise aus einem Wegschlagen der Lösemittelkomponenten des Bindemittels, d.h. einem Eindiffundieren des Lösemittels in den absorptionsfähigen Bedruckstoff (meist Papier oder Karton). Ein weiterer physikalischer Vorgang ist die Härtung durch Verdampfen des Lösungsmittels, d.h. eine Trocknung der Druckfarbe im eigentlichen Sinne (wobei der Begriff "Trocknung" manchmal auch ungenau für die Härtung insgesamt verwendet wird). Schließlich kann die Härtung zu einem gewissen Anteil auf chemischen Prozessen beruhen, insbesondere auf einer Vernetzung und/oder Polymerisation von Bindemittelkomponenten, sowie auf oxidativen Vorgängen. Je nach Zusammensetzung des Bindemittels können diese Prozesse durch verschiedene Trocknungs- oder Härtungshilfsmittel initiiert oder katalysiert werden.

Es besteht grundsätzlich ein Interesse an möglichst schnell härtenden Druckfarben, da die Härtungszeit der limitierende Faktor für die Geschwindigkeit des gesamten Druckvorgangs ist, und somit eine schnelle Härtung zur Wirtschaftlichkeit beiträgt. Verschiedene Maßnahmen, um die Härtung zu beschleunigen, sind aber auch mit Nachteilen verbunden. Dies betrifft zum einen das sogenannte Heatset-Verfahren, bei dem Druckfarben mit relativ leichtflüchtigen Lösemitteln (in der Regel auf Mineralölbasis) eingesetzt werden und diese durch Erhitzen verdampft werden. Aufgrund des zusätzlichen Energieverbrauchs, der thermischen Belastung des Bedruckstoffs und der erforderlichen Rückgewinnung des Lösemittels aus der Abluft scheidet dieses Verfahren für viele Anwendungsbereiche praktisch aus.

Relativ kurze Härtungszeiten können auch mittels Strahlungshärtung erreicht werden, also z.B. durch eine mittels UV-Strahlung initiierte radikalische Vernetzung bzw. Polymerisation von geeigneten Bindemittelkomponenten. Für den Einsatz der UV-Härtung ist allerdings eine technisch entsprechend eingerichtete Druckmaschine erforderlich, d.h. die Ausrüstung mit einer Strahlungsquelle und mit speziellen Walzenmaterialien. Gegen den Einsatz der UV-Härtung bestehen auch bei einigen Anwendern Vorbehalte, u.a. wegen der toxischen oder reizenden Eigenschaften der benötigten Bindemittelkomponenten, Monomere und Photoinitiatoren, sowie der tatsächlichen oder vermeintlichen Bildung von geruchsbelästigenden Spaltprodukten.

Die US 2015/101506 A1 offenbart eine Offsetdruckfarbe oder einen Offsetdrucklack, die/der für einen direkten Kontakt mit Lebensmitteln geeignet ist, umfassend mindestens ein Bindemittel und ggf. mindestens ein Farbmittel, wobei sämtliche Bestandteile der Offsetdruckfarbe oder des Offsetdrucklacks entweder Lebensmittel im Sinne der Verordnung (EG) Nr. 178/2002 des Europäischen Parlaments und des Rates oder Lebensmittelzusatzstoffe im Sinne der Verordnung (EG) Nr. 1333/2008 des Europäischen Parlaments und des Rates sind.

Die EP 0 774 494 A1 offenbart ein Druckfarbenkonzentrat, umfassend 30 bis 70 Gew.% eines Metall-Phthalocyanins, das in einem Druckfarbenträger dispergiert ist. Der Druckfarbenträger kann als Druckfarbenlösungsmittel einen aliphatischen Alkohol mit mindestens 12 Kohlenstoffatomen oder eine aliphatische Carbonsäure mit mindestens 4 Kohlenstoffatomen umfassen.

Die DE 199 07 582 A1 offenbart Bindemittel für Druckfarben, erhältlich durch Umsetzung von Verbindungen A, enthaltend Einheiten von Naturharzen und/oder Naturharzsäuren und/oder Kohlenwasserstoffharzen mit C₅-, C₉-oder Terpen-Einheiten, mit Verbindungen B, enthaltend Einheiten von Phenol-Aldehyd-Kondensationsprodukten, in einem Lösungsmittel C bei einer Temperatur von 50 bis 300 °C, wobei keine vernetzten Produkte gebildet werden, und wobei der Massenanteil der Verbindungen A 1 bis 98%, der der Verbindungen B 0,1 bis 50% und der der Lösungsmittel C in der Reaktionsmischung 1 bis 98% beträgt, und die Summe der Massenanteile stets 100% beträgt.

Der Erfindung liegt daher die Aufgabe zugrunde, eine schnell härtende Druckfarbe oder einen schnell härtenden Drucklack, insbesondere für den Offsetdruck, vorzuschlagen, ohne auf eine thermische Härtung oder eine Strahlungshärtung angewiesen zu sein.

Diese Aufgabe wird bei der Druckfarbe oder dem Drucklack der eingangs genannten Art erfindungsgemäß dadurch gelöst, dass das Bindemittel umfasst:
- eine oder mehrere Lösemittelkomponenten, die ausgewählt sind aus bei 25 °C flüssigen Alkoholen und/oder Aminen, die gesättigt oder ungesättigt und linear oder verzweigt sein können, wobei Alkohole und/oder Amine mit 12 oder mehr C-Atomen in einem Anteil von mindestens 30 Gew.%, bezogen auf das Bindemittel, enthalten sind, und
- eine oder mehrere in der/den Lösemittelkomponente(n) gelöste Harzkomponenten, die ausgewählt sind aus bei 25 °C festen Carbonsäuren mit 12 oder mehr C-Atomen in einem Anteil von mindestens 15 Gew.%, bezogen auf das Bindemittel,
wobei die Druckfarbe oder der Drucklack eine OH-Zahl und eine Aminzahl aufweist, deren Summe über 100 mg(KOH)/g liegt.

Die Charakterisierung der als Lösemittelkomponenten enthaltenen Alkohole und/oder Amine als "flüssig" bezieht sich grundsätzlich auf deren Aggregatzustand unter Standardbedingungen, d.h. die Alkohole und/oder Amine weisen einen Schmelzpunkt von unter 25 °C auf. Günstigerweise liegt der Schmelzpunkt der eingesetzten Verbindungen deutlich niedriger, so dass eine Verarbeitung der Druckfarbe oder des Drucklacks auch bei tieferen Temperaturen möglich ist.

Im Rahmen der vorliegenden Erfindung sind alle flüssigen Bestandteile der Druckfarbe als Lösemittelkomponenten anzusehen, d.h. als Bestandteile des Bindemittels, unabhängig davon, wann und in welcher Form sie der Druckfarbe im Rahmen des Herstellungsprozesses zugefügt werden. Diese Zuordnung ist insbesondere relevant für die definierten Gewichtsanteile, die sich jeweils auf das Bindemittel beziehen. Die erfindungsgemäße Druckfarbe kann verschiedene Lösemittelkomponenten enthalten, wobei mindestens 25 Gew.% des Bindemittels Alkohole und/oder Amine mit mindestens 12 C-Atomen sein müssen, und wobei eine Summe der OH-Zahl und der Aminzahl der Druckfarbe von über 100 mg(KOH)/g resultiert. Die Verwendung längerkettiger Alkohole in Druckfarben ist aus dem Stand der Technik nur in deutlich geringeren Anteilen bekannt, nämlich z.B. als Additive zur Einstellung der rheologischen Eigenschaften (Tack und Viskosität). Insbesondere bei Offsetdruckfarben wurden Alkohole oder Amine bisher nicht als wesentliches Lösemittel eingesetzt, um eine zu hohe Polarität der Druckfarbe zu vermeiden.

Harzkomponenten sind im Rahmen der vorliegenden Erfindung alle Bestandteile der Druckfarbe oder des Drucklacks, die bereits vor dem Härten Feststoffe sind, und die nach dem Härten zur Filmbildung beitragen und eine feste Schicht auf dem Bedruckstoff bilden. Im Falle einer Druckfarbe bindet diese feste Schicht die Pigmente an den Bedruckstoff. Alle diese Bestandteile, die keine Harze im engeren Sinne sein müssen, sind definitionsgemäß Teil des Bindemittels, von dem mindestens 15 Gew.% aus festen Carbonsäuren mit mindestens 12 C-Atomen bestehen müssen. In diesem Sinne sind "feste Carbonsäuren" Verbindungen, die unter Standardbedingungen in fester Form vorliegen, d.h. einen Schmelzpunkt von über 25 °C aufweisen. In der Druckfarbe selbst liegen naturgemäß alle Harzkomponenten in gelöster Form vor, d.h. die Lösemittelkomponenten der Druckfarbe müssen in ihrer Gesamtheit dazu geeignet sein, alle enthaltenen Harzkomponenten zu lösen.

Die Erfinder haben festgestellt, dass eine Druckfarbe oder ein Drucklack mit einer erfindungsgemäßen Zusammensetzung des Bindemittels nach dem Drucken auf einen Bedruckstoff überraschend schnell härtet, ohne dass hierfür eine thermische Behandlung, eine Bestrahlung (z. B. mit UV-Strahlung) oder ein Zusatz von Trocknungshilfsmitteln erforderlich wäre. Ohne an eine bestimmte Erklärung gebunden zu sein, wird davon ausgegangen, dass die schnelle Härtung der erfindungsgemäßen Druckfarbe neben einem Wegschlagen und/oder Verdampfen der Lösemittelkomponenten zumindest teilweise darauf beruht, dass die als Lösemittelkomponenten enthaltenen Alkohole und/oder Amine mit den als Harzkomponenten enthaltenen festen Carbonsäuren unter Ausbildung von Carbonsäureestern bzw. Carbonsäureamiden chemisch reagieren.

Für die Annahme, dass eine derartige Veresterung bzw. Amidbildung erst nach dem Druckvorgang in nennenswertem Umfang einsetzt, gibt es verschiedene plausible Erklärungsansätze. Zum einen könnten katalytische Oberflächeneffekte des Bedruckstoffes (in der Regel Papier) auf die sehr dünne Druckfarbenschicht eine wesentliche Rolle spielen. Ferner erfolgt in der Druckfarbenschicht eine Aufkonzentration der Carbonsäuren durch das teilweise Wegschlagen und/oder Verdampfen der Lösemittelkomponenten. Schließlich wird ein Fortschreiten der Reaktion zwischen den Carbonsäuren und den Alkoholen und/oder Aminen dadurch begünstigt, dass das gebildete Wasser entweichen kann und somit dem Gleichgewicht entzogen wird.

Eine schnell härtende Druckfarbe hat insbesondere auch den Vorteil, dass in relativ kurzer Zeit eine hohe Scheuerfestigkeit erreicht werden kann. Zwar ist die Scheuerfestigkeit auch von anderen Faktoren, wie insbesondere der Beschaffenheit des Bedruckstoffs, abhängig, eine schnelle Härtung wirkt sich aber in jedem Fall positiv auf diesen Parameter aus.

Bei einer bevorzugten Ausführungsform der Erfindung besteht die Druckfarbe aus dem Bindemittel und optional einem oder mehreren Pigmenten, Zusatz-und Hilfsstoffen. Wie bereits erwähnt, sind gemäß der Erfindung sämtliche Lösemittelkomponenten und Harzkomponenten dem Bindemittel zuzuordnen, so dass neben den Pigmenten (im Falle einer Druckfarbe) keine weiteren wesentlichen Bestandteile zur Bildung der Druckfarbe bzw. des Drucklacks erforderlich sind. Zusatz- und Hilfsstoffe, die weder Lösemittel- noch Harzkomponenten sind, können in einem untergeordneten Anteil enthalten sein.

Die Summe aus der OH-Zahl und der Aminzahl der erfindungsgemäßen Druckfarbe liegt erfindungsgemäß bei über 100 mg(KOH)/g, d.h. die Konzentration an Hydroxylgruppen und/oder Aminogruppen muss ausreichend hoch sein, damit die zur Härtung beitragende Reaktion mit den festen Carbonsäuren in nennenswertem Umfang stattfinden kann. Bevorzugt liegt die Summe aus der OH-Zahl und der Aminzahl bei über 150 mg(KOH)/g, weiter bevorzugt bei über 250 mg(KOH)/g, und am meisten bevorzugt im Bereich von 250 bis 450 mg(KOH)/g. Entsprechend diesen Werten ist die erfindungsgemäße Druckfarbe hydrophiler als übliche Offsetdruckfarben, die aus dem Stand der Technik bekannt sind. Die Hydrophilie der Druckfarbe darf allerdings für eine Verwendung im Offsetdruckverfahren nicht zu hoch sein, da sonst eine Vermischung der Druckfarbe mit dem Feuchtmittel auftreten kann.

Bei den flüssigen Alkoholen und/oder Aminen, aus denen die eine oder mehrere Lösemittelkomponenten ausgewählt sind, handelt es sich insbesondere um aliphatische Alkohole und/oder Amine.

Bei einer bevorzugten Ausführungsform der Erfindung enthält das Bindemittel einen oder mehrere flüssige Alkohole als Bindemittelkomponenten, aber keine Amine. In diesem Fall ist die Aminzahl der Druckfarbe null, und die oben genannten Grenzwerte gelten jeweils für die OH-Zahl.

Um eine in der Summe hohe OH-Zahl und Aminzahl zu ermöglichen, sind der oder die Alkohole und/oder Amine mit 12 oder mehr C-Atomen bevorzugt in einem Anteil von mindestens 35 Gew.%, bezogen auf das Bindemittel, in der erfindungsgemäßen Druckfarbe enthalten.

Bei Verwendung von Alkoholen mit 12 oder mehr C-Atomen sind diese bevorzugt ausgewählt aus primären einwertigen Alkoholen, insbesondere aus Isododecylalkohol, Isotridecylalkohol, Palmitoleylalkohol, Oleylalkohol, 2-Butyloctanol, 2-Butyldecanol, 2-Hexyloctanol und 2-Hexyldecanol. Diese Alkohole sind leicht verfügbar, sie werden zum Teil in der kosmetischen Industrie eingesetzt.

Neben den längerkettigen Alkoholen und/oder Aminen können in der erfindungsgemäßen Druckfarbe als Lösemittelkomponente ferner eine oder mehrere Verbindungen mit weniger als 12 C-Atomen in einem Anteil von weniger als 30 Gew.%, bezogen auf das Bindemittel, enthalten sein, die ausgewählt sind aus ein- oder mehrwertigen Alkoholen und deren Estern oder Teilestern mit Carbonsäuren. Durch solche kürzerkettigen Alkohole bzw. Ester kann insbesondere die Löslichkeit der in der Druckfarbe enthaltenen Harzkomponenten verbessert werden. Bevorzugt sind diese Verbindungen mit weniger als 12 C-Atomen ausgewählt aus Ethanol, Propanol, 1,2-Propandiol und Glycerin, sowie deren Estern oder Teilestern mit Essigsäure oder Milchsäure, wie z. B. Diacetin, Triacetin oder Ethyllactat. Art und Menge dieser Verbindungen können unter Berücksichtigung der jeweils enthaltenen Harzkomponenten optimiert werden.

Darüber hinaus kann die erfindungsgemäße Druckfarbe als Lösemittelkomponente ferner eine oder mehrere flüssige Carbonsäuren, Hydroxycarbonsäuren oder deren Ester enthalten, insbesondere als Bestandteil von Rizinusöl. Auch in diesem Fall gilt, dass die Carbonsäuren bei 25 °C flüssig sind.

Erfindungsgemäß umfasst das Bindemittel der Druckfarbe eine oder mehrere feste Carbonsäuren mit 12 oder mehr C-Atomen in einem Anteil von mindestens 15 Gew.%, bezogen auf das Bindemittel. Insbesondere in dem Fall, dass das Bindemittel keine weiteren Harzkomponenten enthält, liegt der Anteil der festen Carbonsäure(n) mit 12 oder mehr C-Atomen bei mindestens 30 Gew.%, weiter bevorzugt bei mindestens 40 Gew.%, jeweils bezogen auf das Bindemittel.

Günstig ist es, wenn die feste(n) Carbonsäure(n) mit 12 oder mehr C-Atomen eine Säurezahl von über 50 mg(KOH)/g aufweisen. Diese Säurezahl bezieht sich auf die Gesamtheit der in dem Bindemittel enthaltenen derartigen Carbonsäuren. Die Säurezahl ist ein Maß für die Konzentration an Carboxylgruppen in dem Bindemittel, die für eine Reaktion mit den Alkoholen und/oder Aminen des Lösungsmittels zur Verfügung stehen und dadurch zur Härtung der Druckfarbe beitragen.

Die Carbonsäure(n) mit 12 oder mehr C-Atomen sind vorzugsweise ausgewählt aus 9,10,16-Trihydroxypalmitinsäure, Shellolsäure, Kerrolsäure und Harzsäuren, insbesondere Abietinsäure, Neoabietinsäure, Pimarsäure, Lävopimarsäure, Palustrinsäure, Agathensäure, Illurinsäure und Podocarpinsäure. Harzsäuren können aus pflanzlichen Harzen isoliert werden.

Gemäß einer bevorzugten Ausführungsform der erfindungsgemäßen Druckfarbe enthält das Bindemittel Schellack als Harzkomponente. Schellack ist ein tierisches Harz, das von der Lackschildlaus gebildet wird, und enthält zu etwa 70 bis 80 Gew.% die drei oben genannten Carbonsäuren 9,10,16-Trihydroxypalmitinsäure (Aleuritinsäure), Shellolsäure und Kerrolsäure.

Eine weitere Ausführungsform der Erfindung sieht vor, dass in der Druckfarbe als Harzkomponente ferner ein oder mehrere Acryl-, Acryl-Styrol-, Acryl-Polyurethan-, Epoxyacrylat- oder Epoxidharze in einem Anteil von weniger als 40 Gew.%, bevorzugt von 10 bis 25 Gew.%, bezogen auf das Bindemittel, enthalten sind. Diese Harze können einen Teil der festen Carbonsäuren mit 12 oder mehr C-Atomen ersetzen, wobei der Anteil aller Harzkomponenten bevorzugt mindestens 30 Gew.%, bezogen auf das Bindemittel, beträgt.

Weiterhin kann das Bindemittel der erfindungsgemäßen Druckfarbe ferner eine oder mehrere Verbindungen mit weniger als 12 C-Atomen in einem Anteil von weniger als 20 Gew.% umfassen, die ausgewählt sind aus ein- oder mehrwertigen Carbonsäuren, Carbonsäureamiden und Harnstoff.

Die Druckfarbe oder der Drucklack weist vorzugsweise eine dynamische Viskosität von 20 bis 200 Pa·s auf, bevorzugt von 50 bis 100 Pa·s, gemessen bei 23 °C und einer Scherrate von 10 s⁻¹. Druckfarben in diesem Viskositätsbereich können insbesondere im Offsetdruckverfahren vorteilhaft eingesetzt werden.

Die erfindungsgemäße Druckfarbe umfasst bei einer bevorzugten Ausführungsform keine Trocknungs- oder Härtungshilfsmittel, insbesondere Metallseifen, Peroxide oder Photoinitiatoren. Wie oben beschrieben, erfolgt bei der erfindungsgemäßen Druckfarbe auch ohne solche Hilfsmittel eine schnelle Härtung durch Wegschlagen, Verdampfen und/oder chemische Reaktion.

Die vorliegende Erfindung betrifft auch die Verwendung der erfindungsgemäßen Druckfarbe oder des erfindungsgemäßen Drucklacks in einem Druckverfahren, insbesondere einem Offsetdruckverfahren, wobei die Druckfarbe oder der Drucklack auf einen Bedruckstoff aufgebracht wird, und wobei im Zuge der Härtung der Druckfarbe oder des Drucklacks eine chemische Reaktion zwischen mindestens einem Alkohol oder Amin als Lösemittelkomponente und mindestens einer Carbonsäure als Harzkomponente erfolgt. Die chemische Reaktion, d.h. die Bildung eines Esters bzw. Amids, kann durch eine vorangehende Härtung aufgrund des Wegschlagens und/oder Verdampfens von Lösemittelkomponenten begünstigt werden, indem sich die Konzentration der Harzkomponenten in der aufgebrachten Druckfarbe erhöht.

Eine Härtung mittels UV-Strahlung ist für eine schnelle Härtung der erfindungsgemäßen Druckfarbe, wie bereits oben erwähnt, grundsätzlich nicht erforderlich, aber auch nicht ausgeschlossen. Somit kann die Druckfarbe oder der Drucklack gemäß einer Ausführungsform der Erfindung im Zuge der Härtung mit Strahlung beaufschlagt werden, wenn die Farbe auf einer entsprechenden Druckmaschine eingesetzt wird.

### Beispiele

### 1. Herstellung von Halbfabrikaten

Als Grundlage für die Herstellung von erfindungsgemäßen Druckfarben oder Drucklacken werden zunächst Halbfabrikate hergestellt, die die Harzkomponenten sowie einen Teil der Lösemittelkomponenten enthalten. Die Zusammensetzungen von sieben verschiedenen Halbfabrikaten sind in den nachfolgenden Tabellen angegeben. Für die Herstellung werden jeweils die festen Harzkomponenten in den flüssigen Lösemittelkomponenten gelöst.

**Halbfabrikat 1**

| Komponente | Gew.% | Produktname | Hersteller |
|---|---|---|---|
| Schellack | 47,5 | | C.E. Roeper |
| Mischung aus 2-Butyloctanol, 2-Butyldecanol, 2-Hexyloctanol und 2-Hexyldecanol | 52,5 | Isofol 14T | Sasol |

**Halbfabrikat 2**

| Komponente | Gew.% | Produktname | Hersteller |
|---|---|---|---|
| Acryl-Styrolharz | 18,5 | Indurez SR10 | Indulor Chemie |
| Acryl-Styrolharz | 18,5 | Indurez SR30 | Indulor Chemie |
| 2-Ethylhexylepoxystearat | 25,0 | Merginat EPE | Hobum Oleochemicals |
| Oleylalkohol | 38,0 | Rofanol 90/95 V | DHW Deutsche Hydrierwerke |

**Halbfabrikat 3**

| Komponente | Gew.% | Produktname | Hersteller |
|---|---|---|---|
| Schellack | 47,0 | | C.E. Roeper |
| Mischung aus 2-Butyloctanol, 2-Butyldecanol, 2-Hexyloctanol und 2-Hexyldecanol | 33,0 | Isofol 14T | Sasol |
| Oleylalkohol | 20,0 | Rofanol 90/95 V | DHW Deutsche Hydrierwerke |

**Halbfabrikat 4**

| Komponente | Gew.% | Produktname | Hersteller |
|---|---|---|---|
| Schellack | 37,5 | | C.E. Roeper |
| 1,2-Propandiol | 7,5 | | Merck |
| Oleylalkohol | 13,2 | Rofanol 90/95 V | DHW Deutsche Hydrierwerke |
| 2-Ethylhexylepoxystearat | 41,8 | Merginat EPE | Hobum Oleochemicals |

**Halbfabrikat 5**

| Komponente | Gew.% | Produktname | Hersteller |
|---|---|---|---|
| Schellack | 46,0 | | C.E. Roeper |
| 1,2-Propandiol | 14,0 | | Merck |
| Rapsmethylester | 14,0 | | Waqner Georq |
| Oleylalkohol | 26,0 | Rofanol 90/95 V | DHW Deutsche Hydrierwerke |

**Halbfabrikat 6**

| Komponente | Gew.% | Produktname | Hersteller |
|---|---|---|---|
| Schellack | 45,0 | | C.E. Roeper |
| Mischung aus 2-Butyloctanol, 2-Butyldecanol, 2-Hexyloctanol und 2-Hexyldecanol | 32,0 | Isofol 14T | Sasol |
| Oleylalkohol | 23,0 | Rofanol 90/95 V | DHW Deutsche Hydrierwerke |

**Halbfabrikat 7**

| Komponente | Gew.% | Produktname | Hersteller |
|---|---|---|---|
| Schellack | 25,0 | | C.E. Roeper |
| Kolophonium | 25,0 | Kolophonium Balsam | Bassermann |
| Isotridecylalkohol (Isomerenqemisch) | 50,0 | Isotridecanol N | BASF |

### 2. Herstellung von Druckfarben

Für die Herstellung von erfindungsgemäßen Druckfarben werden ein oder mehrere der vorstehend beschriebenen Halbfabrikate mit weiteren Lösemittelkomponenten, Pigmenten, Zusatz- und Hilfsstoffen gemischt. Die Zusammensetzungen von acht verschiedenen Druckfarben, die insbesondere für den Offsetdruck geeignet sind, sind in den nachfolgenden Tabellen angegeben. Alle Harz- und Lösemittelkomponenten, die zusammen das Bindemittel der Druckfarbe bilden, sind mit einem Stern ^{∗} gekennzeichnet.

Entsprechende Drucklacke können durch Weglassen des jeweiligen Pigments erhalten werden.

**Druckfarbe 1 (Gelb)**

| Komponente | Gew.% | Produktname | Hersteller |
|---|---|---|---|
| Halbfabrikat 1 ^{∗} | 25,575 | - | - |
| Halbfabrikat 2 ^{∗} | 32,400 | - | - |
| Halbfabrikat 3 ^{∗} | 5,000 | - | - |
| Rizinusöl ^{∗} | 12,500 | | Alberdingk Boley |
| Isotridecylalkohol (Isomerenqemisch) ^{∗} | 6,975 | Isotridecanol N | BASF |
| Pigment Yellow 174 | 13,950 | Sincol Yellow 1128-G21 | Union Colours |
| Calciumcarbonat | 2,250 | Precarb 100 | Bassermann |
| mikronisiertes Polyolefinwachs, PTFE-beschichtet | 1,000 | Ceretan MXF 9510 D Rohwachs | Münzing Chemie |
| Pyrogene Kieselsäure | 0,250 | Wacker HDK H 15 | Wacker Chemie |
| Reisstärke | 0,100 | Remyflo R7 90T | Innotaste |

**Druckfarbe 2 (Gelb)**

| Komponente | Gew.% | Produktname | Hersteller |
|---|---|---|---|
| Halbfabrikat 5 ^{∗} | 19,9500 | - | - |
| Halbfabrikat 6 ^{∗} | 51,2050 | - | - |
| Ölsäure ^{∗} | 5,0000 | | PanReac AppliChem |
| Isotridecylalkohol (Isomerenqemisch) ^{∗} | 4,7500 | Isotridecanol N | BASF |
| Wasser ^{∗} | 2,3750 | - | - |
| Pigment Yellow 174 | 13,3000 | Sincol Yellow 1128-G21 | Union Colours |
| Pyrogene Kieselsäure | 0,2375 | Wacker HDK H 15 | Wacker Chemie |
| mikronisiertes Polyolefinwachs, PTFE-beschichtet | 0,9500 | Ceretan MXF 9510 D Rohwachs | Münzing Chemie |
| Calciumcarbonat | 2,1375 | Precarb 100 | Bassermann |
| Reisstärke | 0,0950 | Remyflo R7 90T | Innotaste |

**Druckfarbe 3 (Magenta)**

| Komponente | Gew.% | Produktname | Hersteller |
|---|---|---|---|
| Halbfabrikat 4 ^{∗} | 61,2 | - | - |
| Halbfabrikat 5 ^{∗} | 11,4 | - | - |
| Diacetin ^{∗} | 5,0 | | Merck |
| Acetyl ieretes Glycerinmonolaurat ^{∗} | 1,9 | Radiamuls Acetem 2130 | Oleon |
| Pigment Red 57:1 | 17,0 | Red BHA | Lily Group |
| Pyrogene Kieselsäure | 2,9 | Wacker HDK H 15 | Wacker Chemie |
| PTFE-Wachs | 0,5 | SST-3P PTFE Powder | Shamrock Technoloqies |
| Reisstärke | 0,1 | Remyflo R7 90T | Innotaste |

**Druckfarbe 4 (Magenta)**

| Komponente | Gew.% | Produktname | Hersteller |
|---|---|---|---|
| Halbfabrikat 5 ^{∗} | 39,9 | - | - |
| Halbfabrikat 6 ^{∗} | 35,0 | - | - |
| Isotridecylalkohol (Isomerenqemisch) ^{∗} | 3,0 | Isotridecanol N | BASF |
| Wasser ^{∗} | 0,5 | - | - |
| Pigment Red 57:1 | 18,0 | Red BHA | Lily Group |
| Pyrogene Kieselsäure | 2,0 | Wacker HDK H 15 | Wacker Chemie |
| mikronisiertes Polyolefinwachs, PTFE-beschichtet | 1,0 | Ceretan MXF 9510 D Rohwachs | Münzing Chemie |
| Calciumcarbonat | 0,5 | Precarb 100 | Bassermann |
| Reisstärke | 0,1 | Remyflo R7 90T | Innotaste |

**Druckfarbe 5 (Cyan)**

| Komponente | Gew.% | Produktname | Hersteller |
|---|---|---|---|
| Halbfabrikat 7 ^{∗} | 53,6 | - | - |
| Rizinusöl ^{∗} | 16,8 | | Alberdingk Boley |
| Isotridecylalkohol (Isomerenqemisch) ^{∗} | 4,5 | Isotridecanol N | BASF |
| Wasser ^{∗} | 2,5 | - | - |
| Pigment Blue 15:3 | 19,0 | Heuco Blue 515303 | Heubach |
| Talkum | 2,2 | Luzenac 10M2 | Imerys |
| Pyrogene Kieselsäure | 0,3 | Wacker HDK H 15 | Wacker Chemie |
| mikronisiertes Polyolefinwachs, PTFE-beschichtet | 1,1 | Ceretan MXF 9510 D Rohwachs | Münzing Chemie |

**Druckfarbe 6 (Cyan)**

| Komponente | Gew.% | Produktname | Hersteller |
|---|---|---|---|
| Halbfabrikat 5 ^{∗} | 19,0000 | - | - |
| Halbfabrikat 6 ^{∗} | 50,2550 | - | - |
| Diacetin ^{∗} | 5,0000 | | Merck |
| Isotridecylalkohol (Isomerenqemisch) ^{∗} | 4,7500 | Isotridecanol N | BASF |
| Wasser ^{∗} | 1,4250 | - | - |
| Pigment Blue 15:3 | 16,1500 | Heuco Blue 515303 | Heubach |
| Pyrogene Kieselsäure | 1,0925 | Wacker HDK H 15 | Wacker Chemie |
| mikronisiertes Polyolefinwachs, PTFE-beschichtet | 0,9500 | Ceretan MXF 9510 D Rohwachs | Münzing Chemie |
| Calciumcarbonat | 1,2825 | Precarb 100 | Bassermann |
| Reisstärke | 0,0950 | Remyflo R7 90T | Innotaste |

**Druckfarbe 7 (Schwarz)**

| Komponente | Gew.% | Produktname | Hersteller |
|---|---|---|---|
| Halbfabrikat 4 ^{∗} | 65,0 | - | - |
| Halbfabrikat 5 ^{∗} | 4,7 | - | - |
| Ölsäure ^{∗} | 5,0 | | PanReac AppliChem |
| Acetyl ieretes Glycerinmonolaurat ^{∗} | 3,8 | Radiamuls Acetem 2130 | Oleon |
| Pigment Black 7 | 18,0 | Printex 35 | Orion |
| Pigment Blue 15:3 | 1,0 | Heuco Blue 515303 | Heubach |
| Pyrogene Kieselsäure | 1,9 | Wacker HDK H 15 | Wacker Chemie |
| PTFE-Wachs | 0,5 | SST-3P PTFE Powder | Shamrock Technologies |
| Reisstärke | 0,1 | Remyflo R7 90T | Innotaste |

**Druckfarbe 8 (Schwarz)**

| Komponente | Gew.% | Produktname | Hersteller |
|---|---|---|---|
| Halbfabrikat 5 ^{∗} | 19,400 | - | - |
| Halbfabrikat 6 ^{∗} | 51,313 | - | - |
| Kokosamin ^{∗} | 3,000 | Rofamin K | Ecogreen Oleochemicals |
| Isotridecylalkohol (Isomerenqemisch) ^{∗} | 2,910 | Isotridecanol N | BASF |
| Wasser ^{∗} | 0,970 | - | - |
| Pigment Black 7 | 18,430 | Printex 35 | Orion |
| Pigment Blue 15:3 | 1,940 | Heuco Blue 515303 | Heubach |
| Pyrogene Kieselsäure | 0,097 | Wacker HDK H 15 | Wacker Chemie |
| mikronisiertes Polyolefinwachs, PTFE-beschichtet | 0,970 | Ceretan MXF 9510 D Rohwachs | Münzing Chemie |
| Calciumcarbonat | 0,873 | Precarb 100 | Bassermann |
| Reisstärke | 0,097 | Remyflo R7 90T | Innotaste |

### 3. Zusammensetzung des Bindemittels und OH-Zahl

In der nachfolgenden Tabelle sind für die erfindungsgemäßen Druckfarben (DF 2 bis 8) und ein Referenzbeispiel (DF 1) jeweils die Anteile in Gew.% der relevanten Harz- und Lösemittelkomponenten, bezogen auf das Bindemittel, angegeben, sowie die gemessene OH-Zahl der Druckfarbe.

| | **DF 1** (Referenz | **DF 2** | **DF 3** | **DF 4** |
|---|---|---|---|---|
| Harze mit Carbonsäuren ≥ C12 | 17,58 | 39,82 | 35,46 | 43,78 |
| Acryl-Styrolharz | 14,54 | 0,00 | 0,00 | 0,00 |
| Alkohole ≥ C12 | 42,89 | 47,09 | 13,89 | 41,88 |
| Alkohole < C12 | 0,00 | 3,45 | 14,07 | 7,17 |
| Rizinusöl | 15,16 | 0,00 | 0,00 | 0,00 |
| flüssige Carbonsäuren | 0,00 | 6,18 | 0,00 | 0,00 |
| sonstige Lösemittel | 9,82 | 3,45 | 36,58 | 7,17 |
| Summe aus OH-Zahl und Aminzahl [mq(KOH)/g] | 147 | 208 | 264 | 284 |

| | **DF 5** | **DF 6** | **DF 7** | **DF 8** |
|---|---|---|---|---|
| Harze mit Carbonsäuren ≥ C12 | 35,78 | 39,69 | 33,81 | 41,78 |
| Acryl-Styrolharz | 0,00 | 0,00 | 0,00 | 0,00 |
| Alkohole ≥ C12 | 41,79 | 47,25 | 12,49 | 47,21 |
| Amine ≥ C12 | 0,00 | 0,00 | 0,00 | 3,92 |
| Alkohole < C12 | 0,00 | 9,70 | 7,05 | 3,54 |
| Rizinusöl | 22,43 | 0,00 | 0,00 | 0,00 |
| flüssige Carbonsäuren | 0,00 | 0,00 | 6,37 | 0,00 |
| sonstige Lösemittel | 0,00 | 3,37 | 40,29 | 3,54 |
| Summe aus OH-Zahl und Aminzahl [mg(KOH)/g] | 207 | 268 | 172 | 177 |

Da mit Ausnahme des Beispiels DF 8 keine Amine in den Druckfarben enthalten sind, ist die Aminzahl in diesen Fällen im Wesentlichen null.

Eine nicht erfindungsgemäße, herkömmliche Offsetdruckfarbe der Anmelderin weist zum Vergleich eine OH-Zahl von 94 mg(KOH)/g auf, und hat im Wesentlichen folgende Zusammensetzung:

**Vergleichsbeispiel 1**

| Komponente | Gew.% | Produktname | Hersteller |
|---|---|---|---|
| Phenolmodifiziertes Kolophoniumharz | 17,5 | Setaprint P3450 | Lawter BVBA |
| Phenolmodifiziertes Kolophoniumharz | 5,5 | Setaprint 2682 | Lawter BVBA |
| Phenolmodifiziertes Kolophoniumharz | 4,6 | Tergraf UZ 86 | Respol S.A. |
| Alkydharz auf Basis von Kokosöl | 5,8 | Setalin V 414 | Lawter BVBA |
| Lackleinöl | 16,0 | | Aberdingk Boley |
| Sojaöl | 13,0 | | ADM Hamburg |
| Holzöl | 6,5 | | Mercur Handel |
| Ethylhexylstearat | 8,8 | Radia 7131 | Oleon |
| Pigment Red 57:1 | 18 | Red BHA | Lily Group |
| 2%Co/6%Mn-octoat in Ethylhexylstearat | 3,0 | Octa Soligen 2,6 HS | OMG |
| Mikronisiertes Polyolefinwachs, PTFE-beschichtet | 1,2 | Ceretan MFX 9510 D Rohwachs | Münzing Chemie |
| Reisstärke | 0,1 | Remyflo R7 90T | Innotaste |

Als **Vergleichsbeispiel 2** dient eine weitere kommerziell erhältliche Offsetdruckfarbe der Fa. Flint mit der Bezeichnung "Novaboard C 990 Protect Bio" untersucht, diese weist eine OH-Zahl von 88 mg(KOH)/g auf.

### 4. Scheuerfestigkeit

Als Maß für die Härtungsgeschwindigkeit der erfindungsgemäßen Druckfarben im Vergleich zu herkömmlichen Druckfarben wurde die Scheuerfestigkeit bestimmt. Hierzu wurden die Farben auf einem gussgestrichenen Chromolux-Papier angedruckt und nach einer Härtungszeit von 30 min einem üblichen Scheuertest unterzogen. Aufgrund der im Wesentlichen geschlossenen Oberfläche des verwendeten Bedruckstoffs kann hier praktisch kein Wegschlagen des Lösemittels erfolgen, sondern nur eine Verdampfung und ggf. eine chemische Reaktion der verschiedenen Bindemittelkomponenten.

Alle Druckfarben wurden auf einer Heidelberg MOZ (Zweifarbenmaschine) in Auflagen von bis zu 20.000 Bogen gedruckt. Das Feuchtmittel war mit 3% Feuchtmittelzusatz (Oxilan E der Fa. Eggen) und 8% Isopropylalkohol angesetzt.

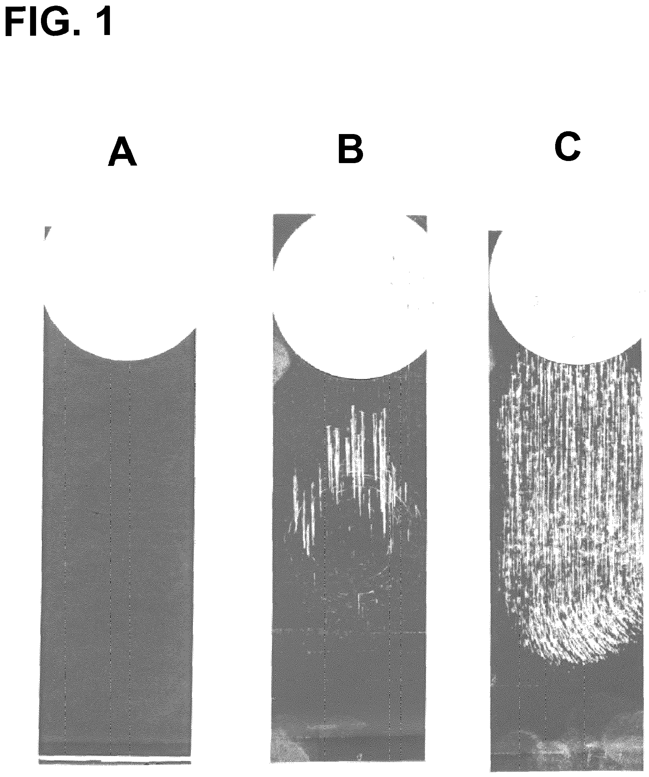

Die Andrucke nach der Durchführung des Scheuertests sind in der Figur 1 photografisch dargestellt. Es zeigen:
- Fig. 1A:: erfindungsgemäße Druckfarbe DF 4 (Magenta) nach 100 Hüben;
- Fig. 1B:: Vergleichsbeispiel 1 nach 5 Hüben; und
- Fig. 1C:: Vergleichsbeispiel 2 nach 5 Hüben.

Die Ergebnisse zeigen einen deutlichen Unterschied in der Scheuerfestigkeit (nach einer Härtungszeit von nur 30 min) zwischen der erfindungsgemäßen Druckfarbe und dem Stand der Technik. Während bei dem Beispiel DF 4 selbst nach 100 Hüben mit dem Scheuerzylinder kein Abrieb des Farbfilms zu erkennen ist, wurde bei den Vergleichsbeispielen der Scheuertest nach nur 5 Hüben abgebrochen, da bereits sehr deutliche Abriebspuren zu erkennen waren.

Vergleichbare Ergebnisse wurden auch mit den anderen erfindungsgemäßen Druckfarben gemäß den Beispielen DF 2 bis 3 und DF 5 bis 8 sowie dem Referenzbeispiel DF 1 erzielt.

Die wesentlich höhere Scheuerfestigkeit der erfindungsgemäßen Druckfarben zu diesem frühen Zeitpunkt ist eine Konsequenz aus der schnellen Härtung, die zumindest teilweise auf einer chemischen Reaktion zwischen den Alkoholen als Lösemittelkomponenten und den Carbonsäuren als Harzkomponenten beruhen dürfte.

## Patentansprüche

1. Druckfarbe oder Drucklack, insbesondere für den Offsetdruck, umfassend ein Bindemittel und optional ein oder mehrere Pigmente, wobei das Bindemittel umfasst:
- eine oder mehrere Lösemittelkomponenten, die ausgewählt sind aus bei 25 °C flüssigen Alkoholen und/oder Aminen, die gesättigt oder ungesättigt und linear oder verzweigt sein können, wobei Alkohole und/oder Amine mit 12 oder mehr C-Atomen in einem Anteil von mindestens 30 Gew.%, bezogen auf das Bindemittel, enthalten sind, und
- eine oder mehrere in der/den Lösemittelkomponente(n) gelöste Harzkomponenten, die ausgewählt sind aus bei 25 °C festen Carbonsäuren mit 12 oder mehr C-Atomen in einem Anteil von mindestens 15 Gew.%, bezogen auf das Bindemittel,
und wobei die Druckfarbe oder der Drucklack eine OH-Zahl und eine Aminzahl aufweist, deren Summe über 100 mg(KOH)/g liegt.

2. Druckfarbe oder Drucklack nach Anspruch 1, bestehend aus dem Bindemittel und optional einem oder mehreren Pigmenten, Zusatz- und Hilfsstoffen.

3. Druckfarbe oder Drucklack nach Anspruch 1 oder 2, wobei die Summe aus der OH-Zahl und der Aminzahl über 150 mg(KOH)/g, bevorzugt über 250 mg(KOH)/g, und weiter bevorzugt von 250 bis 450 mg(KOH)/g liegt.

4. Druckfarbe oder Drucklack nach einem der vorhergehenden Ansprüche, wobei die eine oder mehrere Lösemittelkomponenten aus aliphatischen Alkoholen und/oder Aminen ausgewählt sind.

5. Druckfarbe oder Drucklack nach einem der vorhergehenden Ansprüche, wobei der oder die Alkohole und/oder Amine mit 12 oder mehr C-Atomen in einem Anteil von mindestens 35 Gew.%, bezogen auf das Bindemittel, enthalten sind.

6. Druckfarbe oder Drucklack nach einem der vorhergehenden Ansprüche, wobei der oder die Alkohole mit 12 oder mehr C-Atomen ausgewählt sind aus primären einwertigen Alkoholen, insbesondere aus Isododecylalkohol, Isotridecylalkohol, Palmitoleylalkohol, Oleylalkohol, 2-Butyl-octanol, 2-Butyldecanol, 2-Hexyloctanol und 2-Hexyldecanol.

7. Druckfarbe oder Drucklack nach einem der vorhergehenden Ansprüche, wobei als Lösemittelkomponente ferner eine oder mehrere Verbindungen mit weniger als 12 C-Atomen in einem Anteil von weniger als 30 Gew.%, bezogen auf das Bindemittel, enthalten sind, die ausgewählt sind aus ein- oder mehrwertigen Alkoholen und deren Estern oder Teilestern mit Carbonsäuren, und die bevorzugt ausgewählt sind aus Ethanol, Propanol, 1,2-Propandiol und Glycerin, sowie deren Estern oder Teilestern mit Essigsäure oder Milchsäure, wie z.B. Diacetin, Triacetin oder Ethyllactat.

8. Druckfarbe oder Drucklack nach einem der vorhergehenden Ansprüche, wobei als Lösemittelkomponente ferner eine oder mehrere bei 25 °C flüssige Carbonsäuren, Hydroxycarbonsäuren oder deren Ester enthalten sind, insbesondere als Bestandteil von Rizinusöl.

9. Druckfarbe oder Drucklack nach einem der vorhergehenden Ansprüche, wobei die feste(n) Carbonsäure(n) mit 12 oder mehr C-Atomen in einem Anteil von mindestens 30 Gew.%, bevorzugt von mindestens 40 Gew.%, bezogen auf das Bindemittel, enthalten sind, und insbesondere wobei das Bindemittel keine weiteren Harzkomponenten enthält.

10. Druckfarbe oder Drucklack nach einem der vorhergehenden Ansprüche, wobei die feste(n) Carbonsäure(n) mit 12 oder mehr C-Atomen eine Säurezahl von über 50 mg(KOH)/g aufweisen.

11. Druckfarbe oder Drucklack nach einem der vorhergehenden Ansprüche, wobei die Carbonsäure(n) mit 12 oder mehr C-Atomen ausgewählt sind aus 9,10,16-Trihydroxypalmitinsäure, Shellolsäure, Kerrolsäure und Harzsäuren, insbesondere Abietinsäure, Neoabietinsäure, Pimarsäure, Lävopimarsäure, Palustrinsäure, Agathensäure, Illurinsäure und Podocarpinsäure, und bevorzugt wobei das Bindemittel Schellack als Harzkomponente enthält.

12. Druckfarbe oder Drucklack nach einem der vorhergehenden Ansprüche, wobei als Harzkomponente ferner ein oder mehrere Acryl-, Acryl-Styrol, Acryl-Polyurethan-, Epoxyacrylat- oder Epoxidharze in einem Anteil von weniger als 40 Gew.%, bevorzugt von 10 bis 25 Gew.%, bezogen auf das Bindemittel, enthalten sind, und insbesondere wobei der Anteil aller Harzkomponenten mindestens 30 Gew.%, bezogen auf das Bindemittel, beträgt.

13. Druckfarbe oder Drucklack nach einem der vorhergehenden Ansprüche, wobei das Bindemittel ferner eine oder mehrere Verbindungen mit weniger als 12 C-Atomen in einem Anteil von weniger als 20 Gew.% umfasst, die ausgewählt sind aus ein- oder mehrwertigen Carbonsäure, Carbonsäureamiden und Harnstoff.

14. Druckfarbe oder Drucklack nach einem der vorangehenden Ansprüche, wobei die Druckfarbe oder der Drucklack eine dynamische Viskosität von 20 bis 200 Pa·s aufweist, bevorzugt von 50 bis 100 Pa·s, gemessen bei 23 °C und einer Scherrate von 10 s⁻¹; und/oder wobei die Druckfarbe oder der Drucklack keine Trocknungs- oder Härtungshilfsmittel, insbesondere Metallseifen, Peroxide oder Photoinitiatoren, umfasst.

15. Verwendung einer Druckfarbe oder eines Drucklacks nach einem der vorhergehenden Ansprüche in einem Druckverfahren, insbesondere einem Offsetdruckverfahren, wobei die Druckfarbe oder der Drucklack auf einen Bedruckstoff aufgebracht wird, und wobei im Zuge der Härtung der Druckfarbe oder des Drucklacks eine chemische Reaktion zwischen mindestens einem Alkohol oder Amin als Lösemittelkomponente und mindestens einer Carbonsäure als Harzkomponente erfolgt, und bevorzugt wobei die Druckfarbe oder der Drucklack im Zuge der Härtung mit Strahlung beaufschlagt wird.

## Claims

1. A printing ink or printing varnish, in particular for offset printing, comprising a binder and optionally one or more pigments, wherein the binder comprises:
- one or more solvent components which are selected from liquid (at 25 °C) alcohols and/or amines which can be saturated or unsaturated and linear or branched, wherein alcohols and/or amines with 12 or more C atoms are contained in a proportion of at least 30 % by weight in relation to the binder, and
- one or more resin components dissolved in the solvent component(s), which are selected from solid (at 25 °C) carboxylic acids with 12 or more C atoms in a proportion of at least 15 % by weight in relation to the binder,
and wherein the printing ink or the printing varnish has an OH number and an amine number of which the sum is more than 100 mg(KOH)/g.

2. The printing ink or printing varnish according to claim 1, consisting of the binder and optionally one or more pigments, additives and auxiliaries.

3. The printing ink or printing varnish according to claim 1 or 2, wherein the sum of the OH number and the amine number is more than 150 mg(KOH)/g, preferably more than 250 mg(KOH)/g, and more preferably from 250 to 450 mg(KOH)/g.

4. The printing ink or printing varnish according to any one of the preceding claims, wherein the one or more solvent components is/are selected from aliphatic alcohols and/or amines.

5. The printing ink or printing varnish according to any one of the preceding claims, wherein the one or more alcohols and/or amines with 12 or more C atoms are contained in a proportion of at least 35 % by weight in relation to the binder.

6. The printing ink or printing varnish according to any one of the preceding claims, wherein the one or more alcohols with 12 or more C atoms are selected from primary monovalent alcohols, in particular from isododecyl alcohol, isotridecyl alcohol, palmitoleyl alcohol, oleyl alcohol, 2-butyloctanol, 2-butyldecanol, 2-hexyloctanol and 2-hexyldecanol.

7. The printing ink or printing varnish according to any one of the preceding claims, wherein one or more compounds with fewer than 12 C atoms are also contained as solvent in a proportion of less than 30 % by weight in relation to the binder and are selected from monovalent or polyvalent alcohols and esters or partial esters thereof with carboxylic acids, and which are preferably selected from ethanol, propanol, 1,2-propanediol and glycerol, and esters or partial esters thereof with acetic acid or lactic acid, such as diacetin, triacetin or ethyl lactate.

8. The printing ink or printing varnish according to any one of the preceding claims, wherein as solvent component one or more liquid (at 25 °C) carboxylic acids, hydroxycarboxylic acids or esters thereof are contained, in particular as a constituent of castor oil.

9. The printing ink or printing varnish according to any one of the preceding claims, wherein the solid carboxylic acid(s) with 12 or more C atoms are contained in a proportion of at least 30 % by weight, preferably at least 40 % by weight, in relation to the binder, and in particular wherein the binder does not contain any further resin components.

10. The printing ink or printing varnish according to any one of the preceding claims, wherein the solid carboxylic acid(s) with 12 or more C atoms have an acid value of more than 50 mg(KOH)/g.

11. The printing ink or printing varnish according to any one of the preceding claims, wherein the carboxylic acid(s) with 12 or more C atoms are selected from 9,10,16-trihydroxy palmitic acid, shellolic acid, kerrolic acid and resin acids, in particular abietic acid, neoabietic acid, pimaric acid, levopimaric acid, palustric acid, agathic acid, illuric acid and podocarpic acid, and preferably wherein the binder contains shellac as resin component.

12. The printing ink or printing varnish according to any one of the preceding claims, wherein as resin component one or more acrylic, acrylic-styrene, acrylic-polyurethane, epoxy acrylate or epoxy resins are contained in a proportion of less than 40 % by weight, preferably from 10 to 25 % by weight, in relation to the binder, and in particular wherein the proportion of all resin components is at least 30 % by weight in relation to the binder.

13. The printing ink or printing varnish according to any one of the preceding claims, wherein the binder also comprises one or more compounds with fewer than 12 C atoms in a proportion of less than 20 % by weight, selected from monovalent or polyvalent carboxylic acids, carboxylic acid amides and urea.

14. The printing ink or printing varnish according to any one of the preceding claims, wherein the printing ink or the printing varnish has a dynamic viscosity of from 20 to 200 Pa·s, preferably from 50 to 100 Pa·s, measured at 23°C and a shear rate of 10 s⁻¹; and/or wherein the printing ink or the printing varnish does not comprise any drying or curing aid, in particular metal soaps, peroxides or photoinitiators.

15. Use of a printing ink or a printing varnish according to any one of the preceding claims in a printing method, in particular an offset printing method, wherein the printing ink or the printing varnish is applied to a printing stock, and wherein during the course of the curing of the printing ink or the printing varnish a chemical reaction occurs between at least one alcohol or amine as solvent component and at least one carboxylic acid as resin component, and preferably wherein the printing ink or the printing varnish is exposed to radiation during the course of the curing.

## Revendications

1. Encre d'impression ou vernis d'impression, en particulier pour l'impression offset, comprenant un liant et en option un ou plusieurs pigments, dans laquelle ou lequel le liant comprend :
- un ou plusieurs composants de solvant, qui sont choisis parmi des alcools et/ou des amines liquides à 25 °C, qui peuvent être saturés ou insaturés et linéaires ou ramifiés, dans laquelle ou lequel des alcools et/ou des amines avec 12 atomes de C ou plus sont contenus dans une fraction d'au moins 30 % en poids, par rapport au liant, et
- un ou plusieurs composants de résine dissous dans le/les composant/composants de solvant, qui sont choisis parmi des acides carboxyliques solides à 25 °C avec 12 atomes de C ou plus en une fraction d'au moins 15 % en poids, par rapport au liant,
et dans laquelle ou lequel l'encre d'impression ou le vernis d'impression présente un indice d'OH et un indice d'amine, dont la somme dépasse 100 mg(KOH)/g.

2. Encre d'impression ou vernis d'impression selon la revendication 1, constituée ou constitué du liant et en option d'un ou de plusieurs pigments, d'additifs et d'adjuvants.

3. Encre d'impression ou vernis d'impression selon la revendication 1 ou 2, dans laquelle ou lequel la somme composée de l'indice d'OH et de l'indice d'amine est supérieure à 150 mg(KOH)/g, de manière préférée est supérieure à 250 mg(KOH)/g, et de manière davantage préférée va de 250 à 450 mg(KOH)/g.

4. Encre d'impression ou vernis d'impression selon l'une quelconque des revendications précédentes, dans laquelle ou lequel le ou plusieurs composants de solvant sont choisis parmi des alcools et/ou des amines aliphatiques.

5. Encre d'impression ou vernis d'impression selon l'une quelconque des revendications précédentes, dans laquelle ou lequel le ou les alcools et/ou l'amine ou les amines avec 12 atomes de C ou plus sont contenus en une fraction d'au moins 35 % en poids, par rapport au liant.

6. Encre d'impression ou vernis d'impression selon l'une quelconque des revendications précédentes, dans laquelle ou lequel l'alcool ou les alcools avec 12 atomes de C ou plus sont choisis parmi des alcools monovalents primaires, en particulier parmi l'alcool isodécylique, l'alcool isotrodécylique, l'alcool palmioléylique, l'alcool oléylique, le 2-butyl-octanol, le 2-butyldécanol, le 2-héxyloctanol et le 2-hexyldécanol.

7. Encre d'impression ou vernis d'impression selon l'une quelconque des revendications précédentes, dans laquelle ou lequel sont contenus en outre en tant que composants de solvant un ou plusieurs composés avec moins de 12 atomes de C en une fraction inférieure à 30 % en poids, par rapport au liant, qui sont choisis parmi des alcools mono- ou polyvalents et leurs esters ou esters partiels avec des acides carboxyliques, et qui sont choisis de manière préférée parmi l'éthanol, le propanol, le 1,2-propandiol et la glycérine, ainsi que leurs esters ou esters partiels avec de l'acide acétique ou de l'acide lactique, comme la diacétine, la triacétine ou le lactate d'éthyle.

8. Encre d'impression ou vernis d'impression selon l'une quelconque des revendications précédentes, dans laquelle ou lequel sont contenus en outre en tant que composants de solvant un ou plusieurs acides carboxyliques, acides hydroxycarboxyliques liquides à 25 °C ou leurs esters liquides à 25 °C, en particulier en tant que constituant de l'huile de ricin.

9. Encre d'impression ou vernis d'impression selon l'une quelconque des revendications précédentes, dans laquelle ou lequel l'acide carboxylique ou les acides carboxyliques solides avec 12 atomes de C ou plus sont contenus en une fraction d'au moins 30 % en poids, de manière préférée d'au moins 40 % en poids, par rapport au liant, et en particulier dans laquelle ou lequel le liant ne contient aucun autre composant de résine.

10. Encre d'impression ou vernis d'impression selon l'une quelconque des revendications précédentes, dans laquelle ou lequel l'acide/les acides carboxylique/carboxyliques solide/solides avec 12 atomes de C ou plus présentent un indice d'acide supérieur à 50 mg(KOH)/g.

11. Encre d'impression ou vernis d'impression selon l'une quelconque des revendications précédentes, dans laquelle ou lequel l'acide ou les acides carboxyliques avec 12 atomes de C ou plus sont choisis parmi l'acide 9,10,16-trihydroxypalmitique, l'acide shelloïque, l'acide kerrolique et les acides de résine, en particulier l'acide abiétique, l'acide néo-abiétique, l'acide primarique, l'acide sapiétique, l'acide palustrique, l'acide agathique, l'acide illurinique et l'acide podocarpinique, et de manière préférée dans laquelle ou lequel le liant contient de la gomme-laque en tant que composant de résine.

12. Encre d'impression ou vernis d'impression selon l'une quelconque des revendications précédentes, dans laquelle ou lequel sont contenues en outre en tant que composant de résine une ou plusieurs résines acryliques, styrène-acryliques, acryliques polyuréthannes, époxy-acrylates et d'époxyde en une fraction inférieure à 40 % en poids, de manière préférée de 10 à 25 % en poids, par rapport au liant, et en particulier dans laquelle ou lequel la fraction de tous les composants de résine est d'au moins 30 % en poids, par rapport au liant.

13. Encre d'impression ou vernis d'impression selon l'une quelconque des revendications précédentes, dans laquelle ou lequel le liant comprend en outre un ou plusieurs composés avec moins de 12 atomes de C en une fraction inférieure à 20 % en poids, qui sont choisis parmi de l'acide carboxylique mono- ou polyvalent, des amides d'acide carboxylique et de l'urée.

14. Encre d'impression ou vernis d'impression selon l'une quelconque des revendications précédentes, dans laquelle ou lequel l'encre d'impression ou le vernis d'impression présente une viscosité dynamique de 20 à 200 Pa.s, de manière préférée de 50 à 100 Pa.s, mesurée à 23 °C et à un taux de cisaillement de 10 ^{s-1}, et/ou dans laquelle ou lequel l'encre d'impression ou le vernis d'impression ne comprend aucun adjuvant de séchage ou de durcissement, en particulier aucun savon métallique, aucun peroxyde ou photo-initiateur.

15. Utilisation d'une encre d'impression ou d'un vernis d'impression selon l'une quelconque des revendications précédentes dans un procédé d'impression, en particulier dans un procédé d'impression offset, dans laquelle l'encre d'impression ou le vernis d'impression est appliquée ou appliqué sur un support d'impression, et dans laquelle une réaction chimique entre au moins un alcool ou une amine en tant que composant de solvant et au moins un acide carboxylique en tant que composant de résine a lieu dans le cadre du durcissement de l'encre d'impression ou du vernis d'impression, et de manière préférée dans laquelle l'encre d'impression ou le vernis d'impression est soumise ou soumis à l'action d'un rayonnement dans le cadre du durcissement.
